Europäisches Patentamt

(19) European Patent Office

Office européen des brevets

(11) Veröffentlichungsnummer: **0 198 109**
**B1**

(12) **EUROPÄISCHE PATENTSCHRIFT**

(45) Veröffentlichungstag der Patentschrift:
07.06.89

(51) Int. Cl.⁴: **F 16 K  3/12**

(21) Anmeldenummer: 85109454.0

(22) Anmeldetag: 27.07.85

(54) Absperrschieber.

(30) Priorität: 03.08.84 DE 3428636
06.11.84 DE 3440464

(43) Veröffentlichungstag der Anmeldung:
22.10.86 Patentblatt 86/43

(45) Bekanntmachung des Hinweises auf die Patenter-
teilung: 07.06.89 Patentblatt 89/23

(84) Benannte Vertragsstaaten:
AT BE CH DE FR GB IT LI LU NL SE

(56) Entgegenhaltungen:
DE--B-- 2 730 492
FR--A--   738 677
GB--A-- 2 085 998
US--A-- 2 660 191

(73) Patentinhaber: BOPP & REUTHER GMBH
Carl-Reuther-Strasse 1
D-6800 Mannheim 31 (DE)

(72) Erfinder: Walfried, David
Raiffeisenstrasse 10
D-6701 Maxdorf (DE)

## Beschreibung

Die Erfindung bezieht sich auf einen Absperrschieber mit einem Schiebergehäuse, in dem ein von der Spindel in Spindellängsrichtung verschiebbarer, sich quer zur Strömung erstreckender gummierter Absperrkeil untergebracht ist und das eine von einem nach innen vorspringenden Gehäuserand begrenzte, der ovalen oder ovalähnlichen Außenkontur des Absperrkeils angepaßte obere Gehäuseöffnung aufweist, die durch einen mit einem nach innen abgekröpften, den Gehäuserand hintergreifenden Dichtrand versehenen Deckel von innen druckdicht abgeschlossen ist, der einen nach außen ragenden Innengewindestutzen trägt, in den eine eine Führung für die Spindel, die Spindeldichtung und ein Stützwiderlager für den Spindelbund aufweisende Verschlußschraube eingedreht ist.

Bei einem Absperrschieber mit diesem Deckelverschluß entfallen die sonst bei einer aufgeflanschten Gehäusehaube erforderlichen Flanschverbindungsschrauben und der Deckel wird durch seinen nach innen abgekröpften, den Gehäuserand hintergreifenden Dichtrand vom Mediumdruck selbst in Abdichtrichtung beaufschlagt, so daß er stets sicher in seiner Dichtstellung gehalten wird. Da der Deckel durch das Hintergreifen des Gehäuserandes größer als die obere Gehäuseöffnung ausgebildet ist, wird er bei der Montage zunächst um 90° gekippt und dann in einer bestimmten Schräglage von oben durch die ovale Gehäuseöffnung in das Gehäuse eingefädelt. Nach Einschwenken des Deckels in seine Einbaulage muß dieser bis zu seiner inneren Anlage am Gehäuserand angehoben und dann fest mit dem Gehäuse verspannt werden.

Aus der DE-PS 31 41 416 ist eine Absperrarmatur mit einem solchen sich von innen gegen den Gehäuserand legenden Deckel bekannt, bei der nach dem Einfädeln des Deckels für die weitere Montage zunächst die nichtsteigende Spindel in das Gehäuse eingeführt und ihr Gewindeteil in den Absperrkörper eingeschraubt, sowie die Verschlußschraube in den Innengewindestutzen des Deckels bis zur Anlage an den Spindelbund eingedreht werden muß. Anschließend ist die Gewindespindel durch Betätigen des Spindelkopfes wieder so lange zurückzudrehen, bis nach Anliegen des Absperrkörpers am Gehäusesitz der Deckel mit Stutzen und Verschlußschraube angehoben und schließlich unter Verformung des Deckeldichtringes bis in seine Spannstellung gepreßt wird. In dieser Stellung bilden waagrechte Halbzylindernuten im Deckel und im Gehäuserand beiderseits des Deckels mehrere Hohlzylinder, in die Zylinderstifte als Verriegelungsorgane für des Deckel eingeschoben und durch Sicherungselemente gegen Herausrutschen gesichert werden.

Bei dieser bekannten Absperrarmatur muß zur Deckelmontage die Verschlußschraube ganz eingeschraubt und die Spindel zunächst eingeschraubt und dann wieder zurückgedreht werden und es sind hohe Spindelkräfte für das Anpressen des Deckels an den Gehäuserand erforderlich. Auch für das Einschieben der verschiedenen Verriegelungsstifte in die Hohlzylinder wird viel Zeit benötigt, so daß der Einbau und die Verriegelung des Deckels am Gehäusekopf aufwendig ist. Außerdem ist eine Entspannung der Deckeldichtung nach Lösen der Spindel durch das vorhandene Spiel der Verriegelungsstifte unvermeidlich, so daß es zu Undichtheiten am Gehäusedeckel kommen kann.

Aufgabe der Erfindung ist es, bei einem Absperrschieber mit den Merkmalen des Oberbegriffs des Anspruchs 1 den Einbau des Deckels und seine Verspannung mit dem Gehäuserand sowie die Montage der übrigen Einbauteile wesentlich zu vereinfachen. Die Lösung dieser Aufgabe wird in den kennzeichnenden Merkmalen der Patentansprüche gesehen.

Dadurch, daß gemäß den Merkmalen des Anspruchs 1 zwischen Innengewindestutzen und Verschlußschraube ein Stützring eingelegt ist, an dem zwei gegenüberliegende Stützfüße sitzen, die sich mit ihren unteren Abstützflächen so von oben auf den Gehäuserand aufsetzen, daß beim Anziehen der den Spindelbund einspannenden und die Spindel nach außen abdichtenden Verschlußschraube gleichzeitig auch der Deckel fest mit dem Gehäuse verspannt wird, ist keine separate Verspannung des Deckels mit dem Gehäuserand mehr erforderlich und das Einbringen von Verriegelungsorganen und Sicherungselementen nach dem Spannvorgang entfällt ganz. Vielmehr wird beim Eindrehen der Verschlußschraube in das Innengewinde des Deckelstutzens in einem Arbeitsgang der Deckel bis zur Anlage an die Innenfläche des Gehäuserandes angehoben und die Spindel am Spindelbund eingespannt. Wird die Verschlußschraube fest angezogen, so läßt sich dadurch sowohl die Spindelabdichtung zwischen Deckelstutzen und Verschlußschraube durch Zusammendrücken des im Deckelstutzen eingelegten Dichtringes als auch die Deckelabdichtung zum Gehäuserand durch Anpressen des Deckelrandes an den eingelegten Deckeldichtring herstellen, wobei dieser elastische Verspannungszustand der Spindel- und Deckelabdichtung durch die Selbthemmung der Verschlußschraubenverbindung auf Dauer erhalten bleibt und kein Rückfedern des Deckeldichtringes mehr auftreten kann.

Zweckmäßigerweise ist entsprechend dem Merkmal des Anspruchs 2 der Innengewindestutzen des Deckels im Außendurchmesser bis nahezu auf die für die Außenkontur des Absperrkeils erforderliche lichte Weite der Gehäuseöffnung an ihrer Engstelle erweitert und die Verschlußschraube trägt innen einen Rücksprung für die Abstützung des Spindelbundes und außen ein sich über ihre ganze Höhe erstreckendes Außengewinde, so daß sich in dem vergrößerten lichten Querschnitt des Innengewindestutzens das für die Verspannung erforderliche Gewinde auf der vollen Höhe des Innengewindestutzens unterbringen läßt, und die Aufnahmekammer für die Abstützung des Spindelbundes liegt jetzt nicht mehr unterhalb der Verschlußschraube sondern konzentrisch zum Gewinde im Inneren der Verschlußschraube. Durch diese Nebeneinanderanordnung von Gewinde und Aufnahmekammer.für den Spindelbund kann der Innengewindestutzen trotz ausreichender Gewindelänge in seiner Höhe ganz erheblich kleiner ausgebildet werden. Dadurch läßt sich der Gehäusedeckel mit Stutzen in einer um 90° gekippten Stellung in eine engere Gehäuseöffnung einführen, so daß das Gehäuse im Querschnitt kleiner ausgebildet werden kann. Der kürzere Innengewindestutzen verkleinert gleichzeitig auch die Bauhöhe des Absperrschiebers und außerdem wird durch die Erweiterung des Innengewindestutzens erreicht, daß der auf den Stutzen aufgesetzte Stützring ebenfalls im Durchmesser größer wird, so daß die hiervon nach unten abgehenden Stützfüße sich wesentlich großflächiger am Gehäuserand abstützen können.

Die am Innengewindestutzen gemäß dem Merkmal des Anspruchs 3 nach außen vorspringenden beiden Haltenocken ermöglichen es hierbei, daß der in das Gehäuse von Hand eingefädelte Deckel allein durch Eindrehen des Stützringes in die Abstützstellung von den Führungsleisten der Stützfüße in einer Montagebereitschaftsstellung gehalten wird, bevor die übrigen Teile des Absperrschiebers, d. h. insbesondere die Gewindespindel und die Verschlußschraube eingeschraubt worden sind. Die Enden der Stützfüße liegen in der Abstützstellung voll auf dem Gehäuserand auf und hintergreifen mit ihren Führungsleisten die Montagehaltenocken des Innengewindestutzens, so daß der Gehäusedeckel sicher getragen wird und die Hände frei werden, um die Gewindespindel durch den Innengewindestutzen zu schieben und in die Spindelmutter des Absperrkeils einzuschrauben und schließlich die Verschlußschraube in das Innengewinde des Deckelstutzens einzudrehen. Die Montage des Absperrschiebers wird dadurch wesentlich erleichtert.

Nach dem Merkmal des Anspruchs 4 tragen die Stützfüße am Ende der Führungsbahn einen Halteanschlag, damit sie bei der Montage des Deckels nicht aus dem Bereich der Haltenocken des Innengewindestutzens herausgedreht werden können, und der Deckel ist im Bereich der Halteanschläge mit Vorsprüngen versehen, die eine Drehsicherung für die Stützfüße bilden und die Abstützflächen der Stützfüße in die Spannstellung übergreifen.

Eine ähnliche Montagehilfe mit den gleichen Vorteilen läßt sich auch dadurch erzielen, daß der Innengewindestutzen gemäß den Merkmalen des Anspruchs 5 mit zwei zur gleichen Seite hin außermittig versetzten Haltenocken versehen ist, die von Haltehaken der beiden Stützfüße beim seitlichen Einschieben des Stützringes in die Abstützstellung hintergriffen werden. Die Verriegelung des angehobenen Deckelstutzens erfolgt hier nicht durch Drehen sondern durch seitliches Einschieben des Stützringes in die Abstützstellung. Bei dieser Ausbildung der Stützfüße und der Haltenocken läßt sich leicht ein mittiges Aufsetzen der Stützfüße auf den Gehäuserand an der Engstelle der Gehäuseöffnung erzielen.

Um das Gußmodell für den Deckel mit Stutzen zu vereinfachen, lassen sich als Montagehilfe anstelle der nach außen vorspringenden Haltenocken entsprechend den Merkmalen des Anspruchs 6 auch eine oder zwei diametral gegenüberliegende, zur Engstelle der Gehäuseöffnung umfangsversetzte und sich über die ganze Höhe des Deckelstutzens erstreckende Außenlängsrippen als Drehanschläge für die Stützfüße des Stützringes am Deckelstutzen angießen, wobei die Stützfüße unten Arretierungsvorsprünge tragen, die bei der Montage in Arretierungsrücksprünge des Gehäuserandes oder des Deckels eingreifen. Bei dieser Montagehilfe lassen sich gegenüber den Montagehilfen nach den Ansprüchen 3 bis 5 die Außenlängsrippen ohne zusätzliche Gießkerne gießen und es können auch die Führungsleisten an den Stützfüßen eingespart werden, wofür ein geringer Mehraufwand bei der Montage anfällt.

Bei dieser Montagehilfe wird nach Einsetzen des Absperrkeils der Deckel mit Stutzen in das Gehäuseinnere eingefädelt und anschließend der Stützring so in das Gehäuse eingeschoben, daß die Stützfüße in der großen Achse der ovalen Gehäuseöffnung liegen und durch die Gehäuseöffnung hindurchgehen. Dann wird die Gewindespindel eingedreht und die Verschlußschraube mit wenigen Gewindegängen in den Deckelstutzen eingeschraubt. Jetzt kann die Verschlußschraube zusammen mit allen hieran hängenden Einbauteilen soweit angehoben werden, daß sich der Stützring um 90° bis zum Anlegen der Stützfüße an die Außenlängsrippen des Stutzens drehen läßt. In dieser Stellung liegen die Stützfüße mittig zur kleinen Ovalachse der Gehäuseöffnung und übergreifen mit ihren unteren Abstützflächen den Gehäuserand, so daß beim anschließenden Absenken der Verschlußschraube alle Einbauteile über die Stützfüße des Stützringes am Gehäuserand aufgehängt sind. Die Arretierungsvorsprünge an den Stützfüßen dringen hierbei in die Arretierungsrücksprünge des Gehäuserandes oder des Deckels ein, so daß der Stützring jetzt nicht mehr verdrehbar ist und die Gehäuseeinbauteile beim Eindrehen der Verschlußschraube bis in die Spannstellung sicher vom Stützring getragen werden. Ein Halten der Gehäuseeinbauteile von Hand oder durch andere Hilfsmittel ist auch hier nicht erforderlich.

In Weiterentwicklung der Erfindung weisen die Stützfüße des Stützringes entsprechend dem Merkmal des Anspruchs 7 einen großflächigen bogenförmigen Querschnitt auf und der Gehäuserand trägt im Auflagebereich der beiden Stützfüße großflächige ebene Widerlagervorsprünge. Dadurch liegen die beiden Stützfüße mit großem Querschnitt satt auf den Widerlagervorsprüngen des Gehäuserandes auf und gewährleisten eine sichere Abstützung beim Verspannen des Gehäusedeckels, d. h. beim Abziehen der in den Deckelstutzen eingeschraubten Verschlußschraube. Durch den großflächigen Querschnitt lassen sich die Stützfüße mit dem Stützring auch außerordentlich stabil ausbilden und können wie das Gehäuse und der Deckel mit Stutzen aus Gußeisen hergestellt werden.

Trägt der den Gehäuserand hintergreifende Dichtrand des Gehäusedeckels entsprechend dem Merkmal des Anspruchs 8 einen umlaufenden Rücksprung, der zusammen mit einem eine Schräge aufweisenden umlaufenden Rücksprung des Gehäuserandes eine weitgehend geschlossene Dichtringkammer für einen elastischen Dichtring bildet, so läßt sich die für die Abstützung des Dichtringes erforderliche Breits des nach innen vorspringenden Gehäuserandes und damit der Querschnitt des Gehäuses reduzieren, und der Deckel erhält beim Verspannen mit dem Gehäuse durch den an der Innenschräge des Gehäuserandes keilförmig anliegenden Dichtring eine saubere Lagerzentrierung.

Ist der Dichtring hierbei entsprechend dem Anspruch 9 als stehendes Dichtband mit zwei Randwülsten ausgebildet und trägt der Dichtrand des Deckels eine am Gehäuserand anliegende Anschlagleiste, so können sich die beiden Dichtwülste beim Verspannen des Deckels über die Schräge der Dichtringkammer nach innen verformen und eine sichere Abdichtung des Gehäusedeckels gewährleisten, wobei durch die am Gehäuserand anliegende Anschlagleiste eine metallische Anlage erzielt wird, die eine Überbelastung oder Verquetschung des elastischen Dichtbandes vermeidet.

Die Gehäuseöffnung und der Gehäuseinnenraum lassen sich noch besser zum Einfädeln und Schwenken des Deckels ausnutzen, wenn gemäß dem Merkmal des Anspruchs 10 der Innengewindestutzen mit dem Boden in Richtung der Abkröpfung des Dichtrandes zum Gehäuse hin versetzt im Deckel angeordnet ist. Durch das Herunterziehen des Innengewindestutzens in den Bereich der Abkröpfung des Deckels läßt sich das von der Unterkante der Abkröpfung bis zur Oberkante des Innengewindestutzens reichende Einbaumaß des Deckels noch weiter verringern, so daß für den Deckeleinbau noch weniger Raum benötigt wird.

Wird die metallische Verschlußschraube nach dem Merkmal des Anspruchs 11 mit einer guten Gleiteigenschaft aufweisenden verschleißfesten Kunststoffschicht versehen, die durch Umspritzen der Verschlußschraube oder Auflegen z. B. Aufwalzen einer Umhüllung hergestellt werden kann, läßt sich eine metallische Gleitpaarung zwischen der Verschlußschraube und der Gewindespindel bzw. dem Spindelbund vermeiden und in einfacher Weise eine mit der Verschlußschraube innig verbundene Kunststoff-Gleitfläche schaffen, die sowohl die Führungskräfte als auch die über den Spindelbund übertragenen Spindelkräfte sicher aufnehmen kann. Diese Kunststoffschicht kann auch im Spindelführungsbereich Ringnuten tragen, in die sich in einfacher Weise die Spindeldichtringe unterbringen lassen.

Mehrere Ausführungsbeispiele der Erfindung werden anhand der Zeichnung näher erläutert, und zwar zeigt:

Fig. 1 einen Absperrschieber mit einem den Gehäuserand hintergreifenden Deckel und Stützring im Schnitt nach Linie I-I der Fig. 3,

Fig. 2 den gleichen Absperrschieber im Schnitt nach Linie II-II der Fig. 3,

Fig. 3 eine Draufsicht auf den Absperrschieber nach Fig. 1 und 2,

Fig. 4 einen Absperrschieber im Schnitt nach Linie IV-IV der Fig. 5 mit einer anderen Stützringausbildung und -halterung,

Fig. 5 eine Draufsicht auf den Absperrschieber nach Fig. 4,

Fig. 6 ein weiteres Ausführungsbeispiel des Stützringes im Längsschnitt,

Fig. 7 eine Draufsicht auf den Stützring nach Fig. 6 und

Fig. 8 eine Draufsicht auf den Deckelstutzen für den Stützring nach den Fig. 6 und 7.

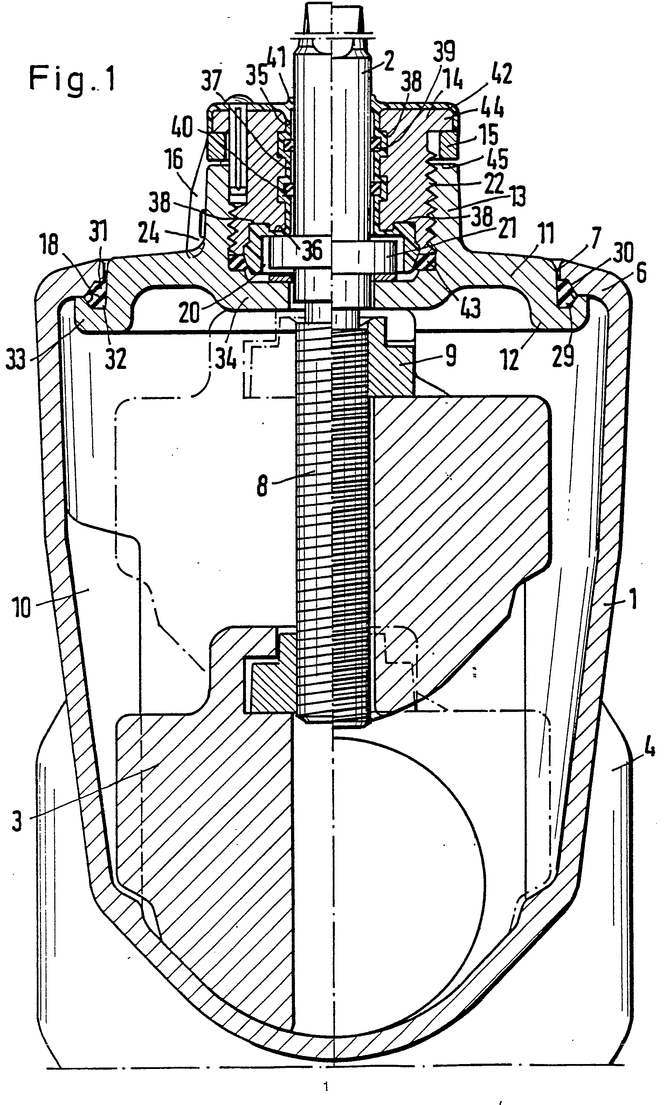

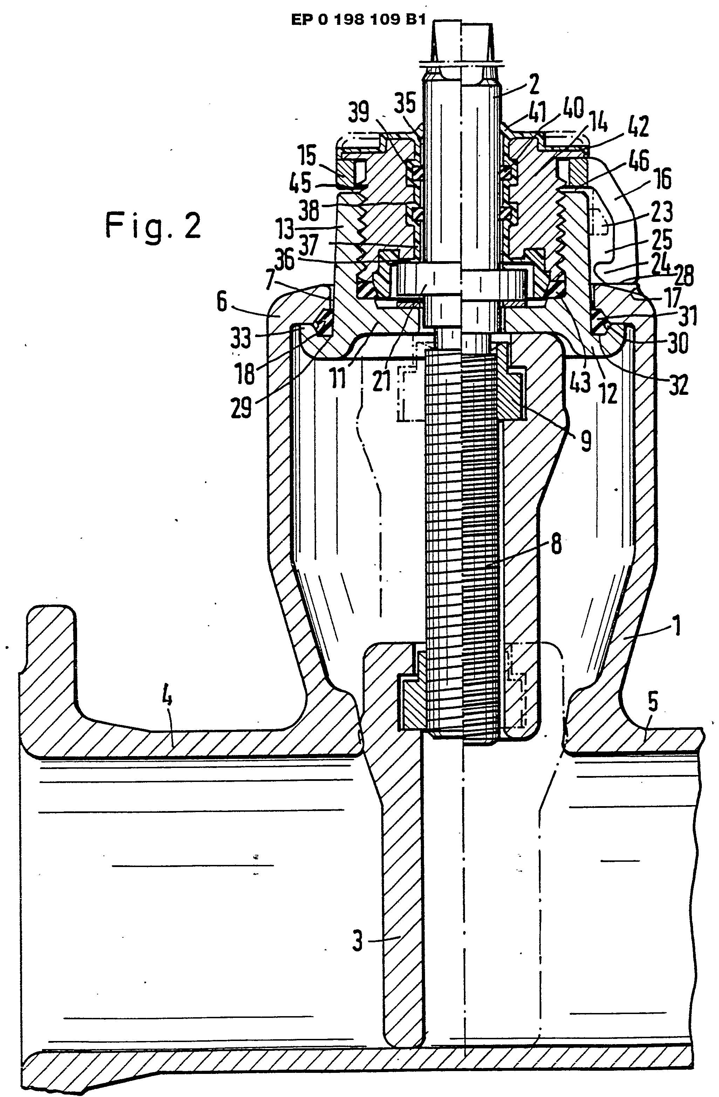

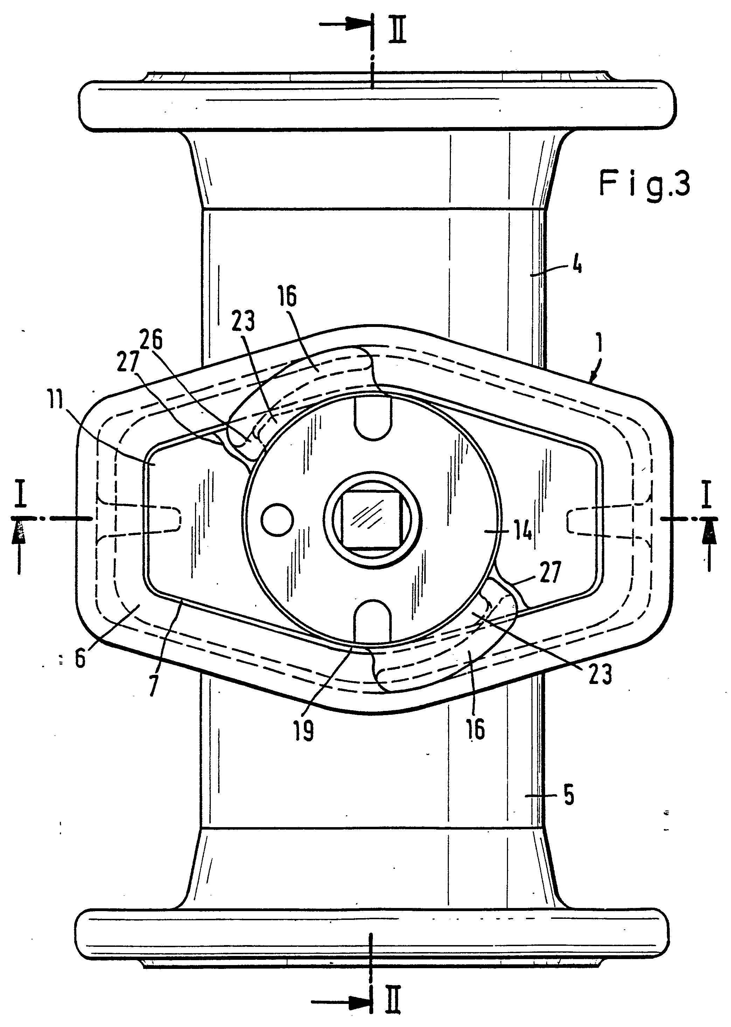

Der in den Fig. 1 bis 3 dargestellte Absperrschieber besteht aus dem Schiebergehäuse 1, in dem ein von der Gewindespindel 2 in Spindellängsrichtung verschiebbarer Absperrkeil 3 untergebracht ist. Der Absperrkeil 3 ist jeweils in der linken Zeichnungshälfte der Fig. 1 und 2 in Schließstellung und in der rechten Zeichungshälfte in Offenstellung dargestellt. Das Schiebergehäuse 1 trägt die beiden mit Flanschen versehene seitlichen Ein- und Austrittsstutzen 4 und 5 für den Durchtritt des Strömungsmediums und besitzt oben einen nach innen vorspringenden Gehäuserand 6, der die obere Gehäuseöffnung 7 begrenzt. Diese Gehäuseöffnung 7 ist der ovalähnlichen Außenkontur des gedrungen gehaltenen Absperrkeils 3 eng angepaßt, damit sich der Absperrkeil in ein möglichst kleines Gehäuse durch die Gehäuseöffnung 7 einschieben läßt. Der Gewindeteil 8 der Spindel 2 ist in die in den Kopf des Absperrkeils 3 eingeschobene Spindelmutter 9 eingeschraubt und taucht in der Offenstellung des Absperrschiebers ganz in den Zylinderhohlraum des Absperrkeils ein. Das Gehäuse 1 ist zur Führung des Absperrkeils 3 mit Längsführungsleisten 10 versehen, die in Längsnuten des Absperrkeils eingreifen.

Die obere Gehäuseöffnung 7 ist durch einen Deckel 11 verschlossen, der einen nach innen abgekröpften Dichtrand 12 trägt, mit dem er den Gehäuserand 6 von innen hintergreift. Der Gehäusedeckel 11 besitzt einen nach außen ragenden Innengewindestutzen 13, in den die Verschlußschraube 14 eingeschraubt ist. Zwischen der Verschlußschraube 14 und dem Deckelstutzen 13 ist ein Stützring 15 eingelegt, der sich über die beiden diametral gegenüberliegenden Stützfüße 16 an großflächigen Widerlagervorsprüngen 17 des Gehäuserandes 6 abstützt und dadurch den Deckel 11 beim Anziehen der Verschlußschraube 14 mit seinem Dichtrand 12 und seinem eingelegten elastischen Dichtring 18 von innen fest gegen den Gehäuserand drückt. Der Innengewindestutzen 13 ist in seinem Außendurchmesser nahezu der Breite der Gehäuseöffnung 7 an der Engstelle 19 angepaßt und die Verschlußschraube 14 trägt innen einen Rücksprung 20 für den Spindelbund 21, so daß sich das Außengewinde 22 der Verschlußschraube über die ganze Höhe des Deckelstutzens 13 erstreckt.

Der Innengewindestutzen 13 ist mit zwei nach außen vorspringenden Montagehaltenocken 23 versehen, die innerhalb des Querschnittsprofils der Gehäuseöffnung 7 liegen und umfangsversetzt zur Engstelle 19 angeordnet sind, damit der in einer um 90° gekippten und schräggestellten Lage in das Gehäuse eingefädelte Deckel 11 mit Stutzen 13 nach dem Zurückschwenken in seine Einbaulage bis zur Anlage an den Gehäuserand 6 frei nach oben gezogen werden kann. Damit der Deckel 11 über diese Haltenocken 23 in der Montagestellung gehalten wird, sind die beiden Stützfüße 16 im Querschnitt bogenförmig ausgebildet und tragen in ihrem unteren Bereich nach innen vorspringende Führungsleisten 24, die die Haltenocken 23 beim Eindrehen des Stützringes 15 in die Abstützstellung hintergreifen. Die Stützfüße 16 sind am Ende der durch die Führungsleisten 24 gebildeten Führungsbahn 25 mit einem Halteanschlag 26 für die Haltenocken 23 versehen. Außerdem trägt der Deckel 11 im Bereich dieser Halteanschläge 26 Vorsprünge 27 zur Absicherung der Stützfüße 16 gegen Verdrehen, die die Abstützflächen 28 der Stützfüße 16 in der Spannstellung des Gehäusedeckels 11 übergreifen.

Der abgekröpfte Dichtrand 12 des Deckels 11 trägt eine umlaufende Trapeznut 29, die zusammen mit dem umlaufenden Schrägrücksprung 30 des Gehäuserandes 6 eine weitgehend geschlossene Dichtringkammer für den elastischen Dichtring 18 bildet. Der elastische Dichtring 18 ist als stehendes Dichtband mit zwei Randwülsten 31 und 32 ausgebildet. Durch die die Trapeznut 29 außen begrenzende umlaufende Anschlagsleiste 33 des Dichtrandes 12 wird die elastische Verformung des Dichtringes 18 fixiert. Der den Boden des Innengewindestutzens 13 bildende Mittelteil 34 des Deckels 11 ist in Richtung der Abkröpfung des Dichtrandes 12 versetzt im Deckel angeordnet.

Die Verschlußschraube 14 ist im Bereich der Spindelführung 35 und der Spindelabstützung 36 mit einer Kunststoffschicht 37 umspritzt, die gute Gleiteigenschaften besitzt und verschleißfest ausgebildet ist. Diese Kunststoffschicht 37 ist durch das Aufspritzen fest mit der metallischen Verschlußschraube 14 verbunden und durch die Vertiefungen 38 an der Spindelführung 35 und der Spindelbundabstützung 36 sicher im Metall verankert. In die Vertiefungen 38 der Spindelführung 35 sind Ringnuten 39 in die Kunststoffschicht 37 eingespritzt, die die Spindeldichtringe 40 aufnehmen. Am Kopf der Verschlußschraube 14 ist eine Dichtlippe 41 zum Schutz des nach außen geführten Endes der Spindel 2 an die Kunststoffumhüllung 37 angespritzt und außerdem ist die Verschlußschraube 14 im Bereich ihrer außenliegenden Flächen 42 mit angespritztem Kunststoff überzogen. Das im Innengewindestutzen 13 eingeschraubte Außengewinde 22 der Verschlußschraube 14 wird durch den Innendichtring 43 abgedichtet. Im verspannten Zustand des Deckels 11 liegen die Abstützflächen 28 der Stützfüße 16 fest an den Widerlagervorsprüngen 17 des Gehäuserandes 6, die Anschlagsleiste 33 des Deckelrandes 12 von innen fest am Gehäuserand 6 und der Bund 44 der Verschlußschraube 14 fest am Stützring 15 an, während zwischen dem Stützring 15 und der Außenstirnfläche 45 des Deckelstutzens 13 ein geringes Spiel 46 verbleibt.

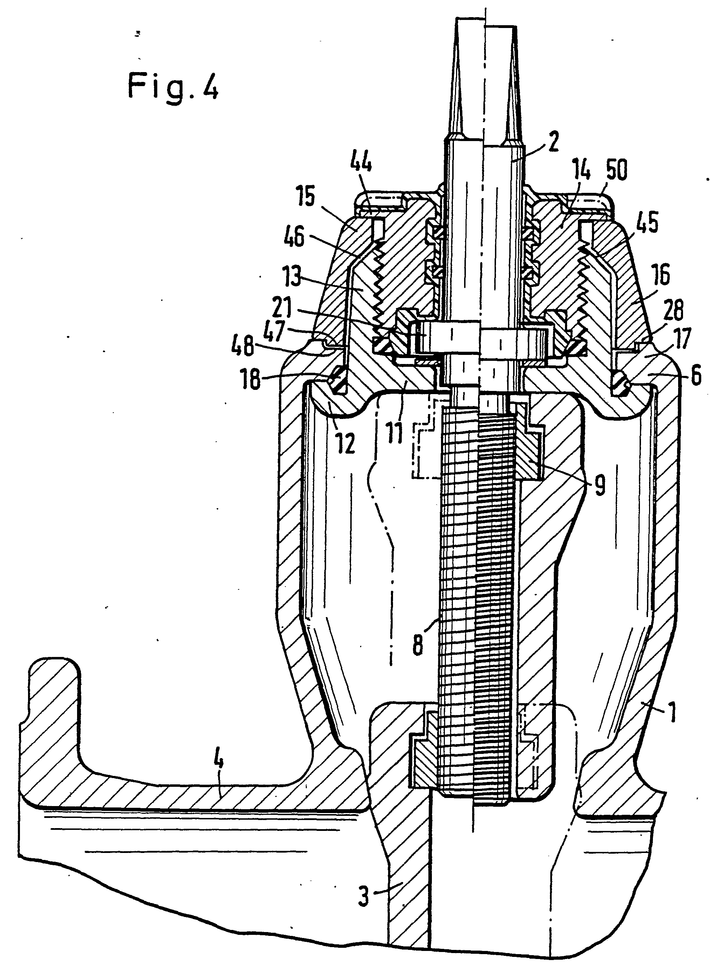

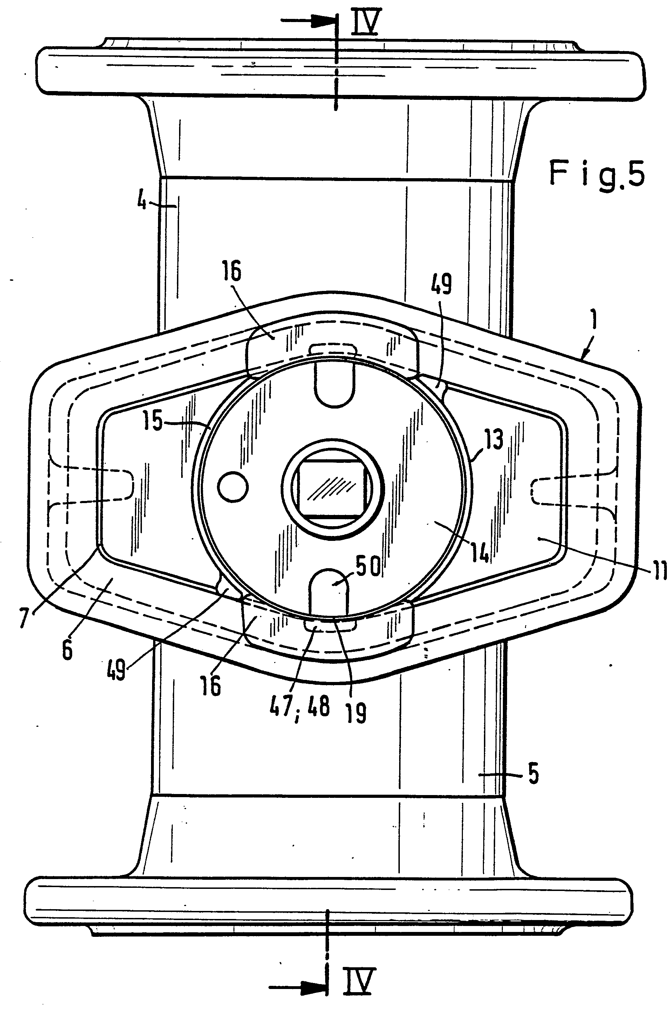

Bei dem in den Fig. 4 und 5 gezeigten Ausführungsbeispiel ist zwischen dem Innengewindestutzen 13 des Deckels 11 und dem Bund 44 der Verschlußschraube 14 ein etwas anders gebildeter Stützring 15 eingelegt, bei dem die in den Fig. 1 bis 3 an den Stützfüßen 16 als Montagehilfe vorgesehenen Führungsbahnen und die hiermit zusammenwirkenden Haltenocken am Deckelstutzen eingespart werden. Dafür tragen die Stützfüße 16 unten Arretierungsvorsprünge 47, die bei der Montage in Arretierungsrücksprünge 48 des Gehäuserandes 6 eingreifen und eine Drehsicherung bilden. Anstelle der schwieriger zu gießenden Haltenocken trägt der Deckelstutzen 13 zwei diametral gegenüberliegende, zur Engstelle 19 der Gehäuseöffnung 7 umfangsversetzte Außenlängsrippen 49, die sich über die ganze Höhe des Deckelstutzens 13 erstrecken.

Bei der Montage der Schiebereinbauteile wird hier nach Einsetzen des Absperrkeils 3 und Einfädeln des Deckels 11 mit Innengewindestutzen 13 der Stützring 15 mit um 90° umfangsverdrehten Stützfüßen 16 durch die Gehäuseöffnung 7 in das Gehäuse 1 eingeführt. Dann wird die Gewindespindel 2 eingedreht und die Verschlußschraube 14 mit nur wenigen Gewindegängen in den Gewindestutzen 13 des Deckels 11 geschraubt. Jetzt kann die Verschlußschraube 14 mit den deranhängenden Einbauteilen angehoben, der Stützring 15 bis zum Anlegen der Stützfüße 16 an die Außenlängsrippen 49 des Deckelstutzens 13 um 90° verdreht und anschließend die Verschlußschraube 14 wieder etwas abgesenkt werden, wodurch die Abstützfläche 28 der Stützfüße 16 sich voll auf den Gehäuserand 6 auflegen und dadurch alle Einbauteile vom Stützring getragen werden.

Da beim Absenken der Verschlußschraube 14 die Arretierungsvorsprünge 47 der Stützfüße 16 in die Arretierungsrücksprünge 48 des Gehäuserandes 6 einrasten, wird ein Verdrehen des Stützringes 15 sicher verhindert. Durch diese Stützringaufhängung werden die Hände frei, um die Verschlußschraube 14 bis in die Spannstellung einzuschrauben. Der Endanzug der Verschlußschraube 14 erfolgt durch einen in die beiden Ausnehmungen 50 einsetzbaren Spannschlüssel. Die Außenlängsrippen 49 des Deckelstutzens 13 sind so angeordnet, daß die Stützfüße 16 in der Endstellung mittig zur Engstelle 19 der Gehäuseöffnung 7 liegen. Um eine großflächige Auflage auf den Gehäuserand 6 zu erzielen, sind die Stützfüße 16 im Querschnitt bogenförmig ausgebildet und das Bogenmaß ist so groß, daß es etwa der lichten Weite der Gehäuseöffnung 7 in der Einführstellung des Stützringes in das Gehäuse entspricht.

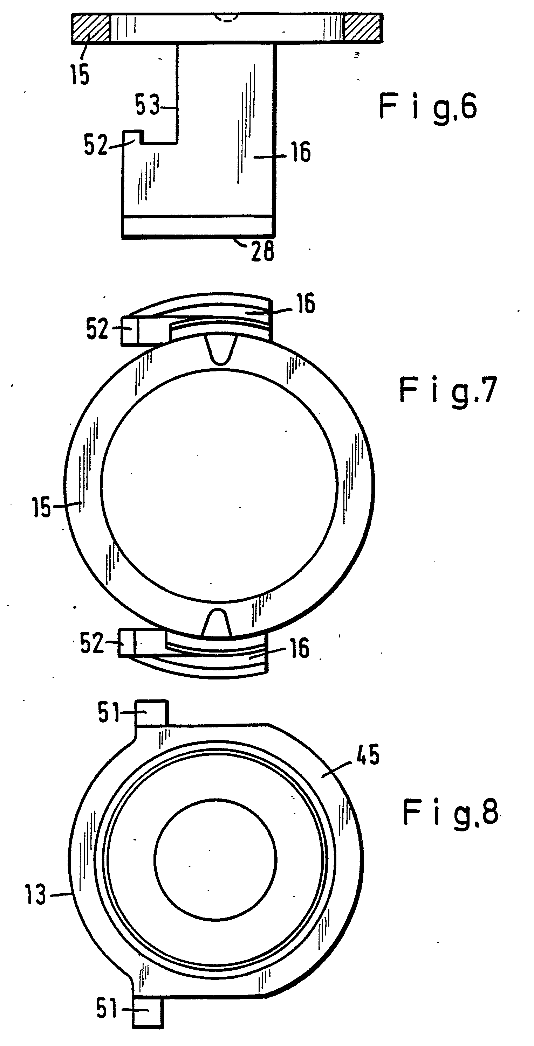

Die Fig. 6 bis 8 zeigen eine weitere Möglichkeit der Stützringausbildung, bei der in Anlehnung an die Fig. 1 bis 3 zwei Haltenocken 51 am Deckelstutzen 13 vorgesehen sind, die jedoch beide zur gleichen Seite versetz am Deckelstutzen 13 sitzen. Die Stützfüße 16 des Stützringes 15 tragen hier zur gleichen Seite zeigende Haltehaken 52, die die beiden Haltenocken 51 hintergreifen und dadurch den Deckel 11 in der Montagestellung festhalten. Der eingefädeltet Deckel 11 wird über den Stutzen 13 angehoben und der Stützring 15 wird mit den Stützfüßen 16 von der Seite her in Richtung der großen Achse der ovalen Gehäuseöffnung 7 bis zum Halteanschlag 53 unter die Haltenocken 51 des Stutzens 13 geschoben. In dieser Stellung liegen die Abstützflächen der Stützfüße 16 auf den Widerlagervorsprüngen 17 des Gehäuserandes 6, so daß die Hände für das Eindrehen der Spindel 2 und das anschließende Einschrauben der Verschlußschraube 14 freibleiben. Die Haltenocken 51 sind so weit außermittig am Deckelstutzen 13 versetzt angeordnet, daß sie sich beim Hochziehen des Deckels 11 frei durch die Gehäuseöffnung 7 hindurchführen lassen.

## Patentansprüche

1. Absperrschieber mit einem Schiebergehäuse (1), in dem ein von der Spindel (2) in Spindellängsrichtung verschiebbarer, sich quer zur Strömung erstreckender gummierter Absperrkeil (3) untergebracht ist und das eine von einem nach innen vorspringenden Gehäuserand (6) begrenzte, der ovalen oder ovalähnlichen Außenkontur des Absperrkeils (3) angepaßte obere Gehäuseöffnung (7) aufweist, die durch einen mit einem nach innen abgekröpften, den Gehäuserand (6) hintergreifenden Dichtrand (12) versehenen Deckel (11) von innen druckdicht abgeschlossen ist, der einen nach außen ragenden Innengewindestutzen (13) trägt, in den eine eine Führung für die Spindel (2), die Spindeldichtung und ein Stützwiderlager für den Spindelbund (21) aufweisende Verschlußschraube (14) eingedreht ist, dadurch gekennzeichnet, daß zwischen der Außenstirnfläche (45) des Deckelstutzens (13) und dem hiermit fluchtenden Bund (44) der Verschlußschraube (14) ein Stützring (15) eingelegt ist, an dem zwei gegenüberliegende, außerhalb des Deckelstutzens (13) nach unter geführte Stützfüße (16) sitzen, die sich mit ihren unteren Abstützflächen (28) so von oben auf den an den Deckelstutzen (13) angrenzenden Bereich des Gehäuserandes (6) aufsetzen, daß beim Anziehen der den Spindelbund (21) einspannenden und die Spindel (2) nach außen abdichtenden Verschlußschraube (14) gleichzeitig der Deckel (11) fest mit dem Gehäuse (1) verspannt wird.

2. Absperrschieber nach Anspruch 1, dadurch gekennzeichnet, daß der Innengewindestutzen (13) des Deckels (11) im Außendurchmesser bis nahezu auf die lichte Weite der Gehäuseöffnung (7) an ihrer Engstelle (19) erweitert ist und die Verschlußschraube (14) innen einen Rücksprung (20) für die Abstützung des Spindelbundes (21) und außen ein sich über ihre ganze Höhe erstreckendes Außengewinde (22) trägt.

3. Absperrschieber nach Anspruch 1 oder 2, dadurch gekennzeichnet, daß der Innengewindestutzen (13) des Deckels (11) als Montagehilfe mit zwei innerhalb des Querschnittprofils der Gehäuseöffnung (7) diametral gegenüberliegenden, umfangsversetzt zur Engstelle (19) der Gehäuseöffnung (7) nach außen vorspringenden Haltenocken (23) versehen ist, die von Führungsleisten (24) der beiden Stützfüße (16) beim Eindrehen des Stützringes (15) in die Abstützstellung hintergriffen werden.

4. Absperrschieber nach Anspruch 3, dadurch gekennzeichnet, daß die Stützfüße (16) des Stützringes (15) am Ende der Führungsbahn (25) mit einem Halteanschlag (26) für die Haltenocken (23) des Deckelstutzens (13) versehen sind und der Deckel (11) im Bereich der Halteanschläge (26) Vorsprünge (27) als Drehsicherung für die Stützfüße trägt, die die unteren Abstützflächen (28) der Stützfüße (16) in der Spannstellung übergreifen.

5. Absperrschieber nach Anspruch 1 oder 2, dadurch gekennzeichnet, daß der Innengewindestutzen (13) des Deckels (11) als Montagehilfe mit zwei innerhalb des Querschnittprofils der Gehäuseöffnung (7) gegenüberliegenden, zur gleichen Seite außermittig versetzten und nach außen vorspringenden Haltenocken (51) versehen ist, die von mit Halteanschlägen (53) versehene Haltehaken (52) der beiden Stützfüße (16) beim seitlichen Einschieben des Stützringes (15) in die Abstützstellung hintergriffen werden.

6. Absperrschieber nach Anspruch 1 oder 2, dadurch gekennzeichnet, daß der Innengewindestutzen (13) des Deckels (11) als Montagehilfe eine oder zwei innerhalb des Querschnittprofils der Gehäuseöffnung (7) diametral gegenüberliegenden, zur Engstelle (19) der Gehäuseöffnung (7) umfangsversetzte und sich über die ganze Höhe des Deckelstutzens (13) erstreckende Außenlängsrippen (49) als Drehanschläge für die Stützfüße (16) des Stützringes (15) trägt und die Stützfüße im Bereich ihrer auf den Gehäuserand (6) aufliegenden Abstützflächen (28) mit Arretierungsvorsprüngen (47) versehen sind, die bei der Montage in im Bereich der Engstelle (19) der Gehäuseöffnung (7) vorgesehene Arretierungsrücksprünge (48) des Gehäuserandes (6) und/oder des Deckels (11) eingreifen.

7. Absperrschieber nach einem oder mehreren der Ansprüche 1 bis 6, dadurch gekennzeichnet, daß die Stützfüße (16) des Stützringes (15) einen großflächigen bogenförmigen Querschnitt aufweisen und der Gehäuserand (6) im Bereich der Abstützflächen (28) der beiden Stützfüße (16) großflächige ebene Widerlagervorsprünge (17) trägt.

8. Absperrschieber nach einem oder mehreren der Ansprüche 1 bis 7, dadurch gekennzeichnet, daß der abgekröpfte, den Gehäuserand (6) von innen hintergreifende Dichtrand (12) des Deckels (11) einen umlaufenden Rücksprung (29) trägt, der zusammen mit einem eine Schräge aufweisenden umlaufenden Rücksprung (30) des Gehäuserandes (6) eine weitgehend geschlossene Dichtringkammer für einen elastischen Dichtring (18) bildet.

9. Absperrschieber nach Anspruch 8, dadurch gekennzeichnet, daß der elastische Dichtring als stehendes Dichtband (18) mit zwei Randwülsten (31, 32) ausgebildet ist und der Dichtrand (12) des Deckels (11) eine am Gehäuserand (6) anliegende Anschlagleiste (33) trägt.

10. Absperrschieber nach einem oder mehreren der Ansprüche 1 bis 9, dadurch gekennzeichnet, daß der den Boden des Innengewindestutzens (13) bildende Mittelteil (34) des Deckels (11) zusammen mit dem Innengewindestutzen (13) zum Gehäuse (1) hin versetzt im Deckel (11) angeordnet ist.

11. Absperrschieber nach einem oder mehreren der Ansprüche 1 bis 10, dadurch gekennzeichnet, daß die metallische Verschlußschraube (14) mindestens im Bereich der Spindelführung (35) und der Spindelbundabstützung (36) mit einer gute Gleiteigenschaften aufweisenden, durch Umspritzen oder Auflegen, z. B. Aufwalzen einer Umhüllung aufgebrachten verschleißfesten Kunststoffschicht (37) versehen ist, die im Spindelführungsbereich (35) Ringnuten (39) für die Spindeldichtringe (40) trägt.

## Claims

1. Gate valve comprising a valve housing (1) wherein is housed a rubber-faced shut-off gate (3) displaceable by the spindle (2) in the longitudinal direction of the spindle and extending transversely to the flow and which has an upper housing aperture (7) matching the oval or oval-like outer profile of the shut-off gate (3) and delimited by an inwardly projecting housing rim (6), which is internally closed off in pressure-tight manner by means of a cover (11) provided with an inwardly bentover sealing rim (12) engaging behind the housing rim (6), which bears an outwardly projecting internally screwthreaded socket (13) into which is screwed a screw closure (14) incorporating a guide for the spindle (2), the spindle packing and a supporting thrust bearing for the spindle flange (21) characterized in that a bearing ring (15) is inserted between the outer end face (45) of the cover socket (13) and the flange (44) of the screw plug (14) aligned therewith, whereon are situated two mutually opposed support legs (16) downwardly extended on the outside of the cover socket (13), which bear with their lower bearing surfaces (28) from above on the portion of the housing rim (6) adjacent to the cover socket (13) in such a way, that upon tightening the screw closure (14) clamping the spindle flange (21) and outwardly sealing off the spindle (2), the cover (11) is firmly braced against the housing (1).

2. Gate valve according to claim 1, characterized in that the internally screw-threaded socket (13) of the cover (11) has its external diameter enlarged to almost the unobstructed width of the housing aperture (7) at its narrowest point (19) and that the screw closure (14) has internally a recess (20) for supporting the spindle flange (21) and externally an outer screw-thread (22) extending over its whole height.

3. Gate valve according to claim 1 or 2, characterized in that the internally screw-threaded socket (13) of the cover (11) is provided, as an aid to assembly, with two retaining cams (23) which are diametrically opposed within the cross-sectional outline of the housing aperture, are peripherally staggered with respect to the narrow point (19) of the housing aperture (7) and project outwards and which are engaged from behind by locating fillets (24) of the two support legs (16) upon screwing the bearing ring (15) into the supporting position.

4. Gate valve according to claim 3, characterized in that the support legs (16) of the bearing ring (15) are provided at the end of the guide track (25) with a retaining stop (26) for the retaining cams (23) of the cover socket (13) and that the cover (11) carries projections (27) in the area of the retaining stops (26) to secure the support legs against rotation, which engage over the lower bearing surfaces (28) of the support legs (16) in the braced position.

5. Gate valve according to claim 1 or 2, characterized in that the internally screw-threaded socket (13) of the cover (11) is provided, as an aid to assembly, with two outwardly projecting retaining cams (51), oppositely situated within the cross-sectional outline of the housing aperture (7) and eccentrically offset towards the same side, which are engaged from behind by retaining hooks (52) of the two support legs (16), provided with retaining stops (53), upon lateral insertion of the bearing ring (15) in the supporting position.

6. Gate valve according to claim 1 or 2, characterized in that the internally screw-threaded socket (13) of the cover (11) carries, as an aid to assembly, one or two external longitudinal fins (49), diametrically opposed within the cross-sectional outline of the housing aperture (7), circumferentially offset with respect to the narrow point (19) of the housing aperture (7) and extending over the whole height of the cover socket (13) as rotational stops for the support legs (16) of the bearing ring (15) and that the support legs are provided in the region of their bearing surfaces (28) resting on the housing rim (6) with arresting projections (47) which upon assembly engage in arresting recesses (48) of the housing rim (6) and/or of the cover (11) provided in the region of the narrow point (19) of the housing aperture (7).

7. Gate valve according to one or more of claims 1 to 6, characterized in that the support legs (16) of the bearing ring (15) have an arcuate cross-section of large area and the housing rim (6) carries plane counter-bearing projections (17) of large area in the region of the bearing surfaces (28) of the two support legs (16).

8. Gate valve according to one or more of claims 1 to 7, characterized in that the bent-over sealing rim (12) of the cover (11) engaging behind the housing rim (6) from the inside carries an encircling recess (29) which with an encircling recess (30) of the casing rim (6) incorporating a slope, forms a largely enclosed sealing ring chamber for an elastic sealing ring (18).

9. Gate valve according to claim 8, characterized in that the elastic sealing ring is formed as an upright sealing strip (18) comprising two marginal beads (31, 32) and the sealing rim (12) of the cover (11) carries a stop ridge (33) bearing on the rim (6).

10. Gate valve according to one or more of claims 1 to 9, characterized in that the central portion (34) of the cover (11) forming the base of the internally screw-threaded socket (13) is installed in the cover (11), offset towards the casing (1) together with the internally screw-threaded socket (13).

11. Gate valve according to one or more of claims 1 to 10, characterized in that the metal screw cover (14) is provided at least in the region of the spindle guide (35) and of the spindle flange support (36), with an anti-wear plastics material layer (37) having satisfactory sliding properties and applied by injection moulding of coating, e. g. rolling-on of a sheath which bears circular grooves (39) in the spindle guiding section (35) for the spindle sealing rings (40).

## Revendications

1. Vanne d'arrêt comportant une boîte de vanne (1) dans laquelle est logé un coin d'arrêt caoutchouté (3) qui peut coulisser à l'aide de la tige (2) dans le sens de la longueur de celle-ci et s'étend transversalement par rapport à l'écoulement, laquelle boîte de vanne (1) présente, délimitée par un bord de boîte (6) faisant saillie vers l'intérieur et adaptée au contour extérieur ovale ou semblable à un ovale du coin d'arrêt (3), une ouverture de boîte supérieure (7) fermée de l'intérieur d'une manière étanche par un couvercle (11) muni d'un bord d'étanchéité courbé vers l'intérieur (12) venant en prise par derrière avec le bord de boîte (6), qui présente un prolongement taraudé (13) faisant saillie vers l'extérieur dans lequel est introduit par rotation un bouchon fileté (14) qui comporte un guide pour la tige (2), la garniture de la tige et un contre-appui formant butée pour l'épaulement de tige (21), caractérisée en ce qu'entre la surface frontale extérieure (45) du prolongement de couvercle (13) et l'épaulement (44) aligné avec celui-ci du bouchon fileté (14), est intercalée une bague d'appui (15) au niveau de laquelle se trouvent deux empattements opposés (16) dirigés vers le bas à l'extérieur du prolongement de couvercle (13), qui s'appliquent d'en haut par leurs surfaces d'appui inférieures (28) sur la zone de bord de boîte (6) voisine du prolongement de couvercle (13), si bien que lors du serrage du bouchon fileté (14) qui bloque l'épaulement de tige (21) et rend la tige (2) étanche vers l'extérieur, le couvercle (11) est simultanément assujetti solidairement à la boîte (1).

2. Vanne d'arrêt selon la revendication 1, caractérisée en ce que le prolongement taraudé (13) du couvercle (11) a son diamètre extérieur élargi jusqu'à atteindre approximativement le diamètre intérieur de l'ouverture de boîte (7) au niveau de sa partie étroite (19), le bouchon fileté (14) présentant, intérieurement, un renfoncement (20) destiné à supporter l'épaulement de tige (21) et, extérieurement, un filetage mâle (22) qui s'étend sur toute sa hauteur.

3. Vanne d'arrêt selon la revendication 1 ou 2, caractérisée en ce que le prolongement taraudé (13) du couvercle (11) comporte, comme moyens auxiliaires de montage, deux ergots de blocage (23) diamétralement opposés à l'intérieur du profil en coupe transversale de l'ouverture de boîte (7), décalés circonférentiellement par rapport à la partie étroite (19) de l'ouverture de boîte (7) et faisant saillie vers l'extérieur, qui, lors de l'introduction par rotation de la bague d'appui (15) dans la position d'appui sont mis en prise par derrière par des nervures de guidage des deux empattements (16).

4. Vanne d'arrêt selon la revendication 3, caractérisée en ce que les empattements (16) de la bague d'appui (15) comportent, à l'extrémité de la glissière (25), une butée d'arrêt (26) pour les ergots de blocage (23) du prolongement de couvercle (13), le couvercle (11) possédant, dans la zone des butées d'arrêt (26), comme dispositif de sécurité en rotation pour les empattements (16), des parties saillantes (27) qui recouvrent les surfaces d'appui inférieures (28) des empattements (16) dans la position de serrage.

5. Vanne d'arrêt selon la revendication 1 ou 2, caractérisée en ce que le prolongement taraudé (13) du couvercle (11) comporte, comme moyens auxiliaires de montage, deux ergots de blocage (51) opposés à l'intérieur du profil en coupe transversale de l'ouverture de boîte (7), excentrés du même côté et faisant saillie vers l'extérieur, qui, lors de l'insertion latérale de la bague d'appui (15) dans la position d'appui, sont mis en prise par derrière par des crocs de blocage (52) des deux empattements (16), pourvus de butées d'arrêt (53).

6. Vanne d'arrêt selon la revendication 1 ou 2, caractérisée en ce que le prolongement taraudé (13) du couvercle (11) présente, comme moyens auxiliaires de montage, une ou deux nervures longitudinales externes (49) diamétralement opposées à l'intérieur du profil en coupe transversale de l'ouverture de boîte (7), décalées circonférentiellement par rapport à la partie étroite (19) de l'ouverture de boîte (7) et qui s'étendent sur toute la hauteur du prolongement de couvercle (13), pour servir de butées de rotation pour les empattements (16) de la bague d'appui (15), les empattements comportant, dans la zone de leurs surfaces d'appui (28) qui reposent sur le bord de boîte (6), des protubérances d'arrêt (47) qui, lors du montage, s'encastrent dans des renfoncements d'arrêt (48) du bord de boîte (6) et/ou du couvercle (12), prévus dans la zone de la partie étroite (19) de l'ouverture de boîte (7).

7. Vanne d'arrêt selon une ou plusieurs des revendications 1 à 6, caractérisée en ce que les empattements (16) de la bague d'appui (15) ont une section transversale cintrée à grande surface, le bord de boîte (6) présentant, dans la zone des surfaces d'appui (28) des deux empattements (16), des protubérances de contre-appui (17) planes à grande surface.

8. Vanne d'arrêt selon une ou plusieurs des revendications 1 à 7, caractérisée en ce que le bord d'étanchéité (12) du couvercle (11), courbé et qui vient en prise par derrière, de l'intérieur, avec le bord de boîte (6), présente un renfoncement continu (29) qui, conjointement avec un renfoncement continu (30) du bord de boîte (6), pourvu d'un chamfrein, définit une chambre de bague d'étanchéité largement fermée pour une bague d'étanchéité élastique (18).

9. Vanne d'arrêt selon la revendication 8, caractérisée en ce que la bague d'étanchéité élastique est conçue sous la forme d'une bande d'étanchéité permanente (18) pourvue de deux bourrelets de bord (31, 32), le bord d'étanchéité (12) du couvercle (11) présentant un rebord de butée (33) qui s'applique contre le bord de boîte (6).

10. Vanne d'arrêt selon une ou plusieurs des revendications 1 à 9, caractérisée en ce que la partie médiane (34) du couvercle (11) formant le fond du prolongement taraudé (13) est, conjointement avec le prolongement taraudé (13), disposée dans le couvercle (11) en étant décalée jusque dans la boîte (1).

11. Vanne d'arrêt selon une ou plusieurs des revendications 1 à 10, caractérisée en ce que le bouchon fileté métallique (14) comporte, au moins dans la zone du guide-tige (35) et de l'appui d'épaulement de tige (36), une couche en matière synthétique résistante à l'usure (37), dotée de bonnes propriétés de coulissement, appliquée par injection ou par enduction, par exemple au rouleau, d'un enrobage, et qui présente, dans la zone du guide-tige (35), des gorges annulaires (39) pour les bagues d'étanchéité de tige (40).

Fig.1

EP 0 198 109 B1

Fig. 2

Fig.3

Fig.4

IV

Fig.5

IV

Fig.6

Fig.7

Fig.8